# FASCICULE DE BREVET EUROPEEN

(11) **EP 2 742 229 B1**
(45) Date de publication et mention de la délivrance du brevet: **24.06.2015**
(21) Numéro de dépôt: 12758553.7
(22) Date de dépôt: 08.08.2012
(51) Int. Cl.: F02K 1/70, F02K 1/72

(54) **DISPOSITIF D'INVERSION DE POUSSEE POUR TUYERE COMPACTE**
SCHUBUMKEHRER FÜR KOMPAKTES STRAHLROHR
THRUST REVERSER DEVICE FOR COMPACT JET PIPE

(30) Priorité: 08.08.2011 FR 1157247
(43) Date de publication de la demande: 18.06.2014
(73) Titulaire: Snecma, 75015 Paris (FR)
(72) Inventeur: GALLET, François, F-77550 Moissy-Cramayel Cedex (FR)
(74) Mandataire: Gevers France
(86) Numéro de dépôt international: PCT/FR2012/051862
(87) Numéro de publication internationale: WO 2013/021136

(56) Documents cités:
- EP-A1- 1 004 766
- FR-A1- 2 132 380
- FR-A1- 2 947 869
- FR-A1- 2 952 908
- US-A1- 2002 124 550

## Description

La présente invention porte sur un turboréacteur multi flux, notamment à double flux, à flux séparés, le flux froid formant un flux annulaire concentrique au flux primaire et étant éjecté à travers une tuyère distincte du flux primaire. L'invention porte plus particulièrement sur l'inverseur de poussée monté dans la nacelle formant l'enveloppe de la soufflante.

### Art antérieur

La tendance actuelle est de concevoir des moteurs à grand taux de dilution car ils permettent d'en augmenter la puissance et d'améliorer la consommation spécifique. L'augmentation du taux de dilution s'accompagne cependant d'une augmentation de la masse de la nacelle, en particulier du carénage de la soufflante, et de la traînée produite par celle-ci. Ces facteurs réduisent les gains en consommation attendus.

Une solution pour remédier à ce problème est de réduire la longueur de cette partie de nacelle formant le carénage du flux secondaire. Celle-ci, plus courte, est plus légère et induit une moindre traînée. C'est ainsi que des nacelles ultracourtes ont été proposées, telles que décrites dans le document US 2002/0124550.

Il faut dans ce cas résoudre le problème du logement de l'inverseur de poussée du flux secondaire car l'espace disponible dans la nacelle au niveau de l'élément de tuyère, en aval du carter intermédiaire, s'en trouve réduit. Les dispositifs d'inversion de poussée du flux secondaire connus ne sont pas compatibles avec les nacelles ultracourtes, notamment, car ils comprennent tout un système de biellettes et de grilles d'inversion de poussée, qui doit être logé dans la tuyère et qui donc impose une tuyère relativement longue.

Par ailleurs pour ce type de moteur, la section de la veine du flux secondaire en sortie de tuyère est généralement établie de manière à rendre maximal le rendement pour un point de fonctionnement du moteur ; on choisit par exemple une section d'échappement optimale en régime de croisière. Il est connu d'améliorer les performances du moteur sur toute la plage des régimes de fonctionnement de celui-ci avec une tuyère à section variable. La réalisation d'une telle tuyère à section variable est cependant complexe et implique l'aménagement dans la nacelle d'un mécanisme d'actionnement des éléments mobiles permettant d'en faire varier la section. Ce mécanisme vient interférer avec celui du dispositif d'inversion de poussée et son encombrement s'ajoute à celui de la commande des inverseurs de poussée du flux secondaire. Le problème se pose particulièrement lorsque l'on souhaite réaliser une nacelle ultracourte ; la nacelle offre moins d'espace pour loger ensemble les deux mécanismes.

### Présentation de l'invention

L'invention a pour premier objet l'agencement d'un mécanisme d'inversion de poussée qui autorise l'intégration d'une nacelle du type ultracourt.

L'invention a également pour objet l'agencement d'un mécanisme de commande de la section de tuyère associé à celui du mécanisme d'inversion de poussée.

On parvient à ces objectifs avec une nacelle de turboréacteur à double flux, la nacelle formant l'enveloppe de la soufflante, comprenant un premier élément de carénage, amont, et un second élément de carénage formant tuyère, le second élément étant mobile en translation entre une position amont où il assure la continuité aérodynamique de la nacelle et une position aval découvrant des ouvertures d'inversion de flux, un dispositif d'inversion de poussée étant logé dans la nacelle et comprenant des volets inverseurs du flux secondaire ainsi que des grilles de guidage radial de flux.

La nacelle est conformément à l'invention caractérisée par le fait que les grilles de guidage radial de flux sont mobiles en translation le long de l'axe de la nacelle entre une position où elles sont escamotées dans le premier élément de carénage et une position active de guidage de flux, le second élément de carénage de soufflante étant solidaire desdites grilles de guidage et que les volets inverseurs sont montés mobiles en rotation autour d'axes transversaux par rapport à l'axe de la nacelle et solidaires des grilles de guidage.

Alors que dans l'art antérieur le dispositif inverseur de poussée est logé à l'intérieur de l'élément mobile de la nacelle, ce dispositif est ici logé dans le premier élément de carénage et ainsi, selon la solution de l'invention, il n'est plus nécessaire de réserver un tel volume dans l'intérieur de l'élément mobile de nacelle. L'élément mobile, c'est-à-dire le second élément de carénage formant tuyère peut être aussi court que souhaité.

Il suffit conformément à une autre caractéristique que le premier élément de carénage non mobile supporte des rails de guidage pour les grilles, s'étendent vers l'aval. Lorsque le second élément mobile est en position amont, en phase de vol, il recouvre les rails de guidage qui sont ainsi contenus à l'intérieur du second élément mobile.

De préférence, les grilles ainsi que le second élément de carénage sont solidaires d'un anneau de synchronisation perpendiculaire à l'axe du moteur. L'anneau permet d'entraîner l'ensemble au moyen d'organes moteurs montés dans le premier élément de carénage à l'amont.

La mise en rotation des volets inverseurs peut ainsi être commandée en fonction de la position axiale des grilles, rétractée ou déployée. Plus particulièrement, les volets inverseurs sont commandés en rotation par des biellettes logées dans le premier élément de carénage de soufflante.

Ces biellettes sont, conformément à un mode de réalisation, montées coulissantes parallèlement aux rails de guidage, une extrémité des biellettes étant articulée sur les volets inverseurs et l'autre extrémité coulissant dans un logement du premier élément de carénage de la nacelle. Plus particulièrement, lorsque la grille translate le long des rails, les biellettes sont guidées en translation le long des rails de guidage, interdisant ainsi une ouverture des volets, et quand la grille arrive en fin de course un agencement entraîne leur pivotement autour d'un axe perpendiculaire aux rails de guidage, enclenchant ainsi le basculement des volets inverseurs en position de déviation de flux. Le flux secondaire est dévié au travers des grilles de guidage radial.

Un avantage de la solution de l'invention est de permettre de combiner la commande de l'inverseur de poussée à la variation de section de la veine d'air à l'éjection. Dans ce cas, le second élément ménage avec le carénage du corps central du turboréacteur, une section de flux variable fonction de la position du second élément de carénage formant tuyère. Pour ce faire, il suffit que la partie mobile soit suffisamment recouverte par la partie statique pour que, sur la première portion de la course de la partie mobile, la tuyère reste fermée et n'alimente pas les grilles.

Ainsi la section de la veine de flux secondaire augmente quand le second élément est entraîné depuis sa position amont sur une partie de son déplacement vers l'aval, le dispositif d'inversion de poussée étant mis en place quand le second élément formant tuyère poursuit son déplacement vers l'aval.

### Brève description des figures.

La figure 1 montre le profil d'un moteur à turbine à gaz à double flux équipé d'une nacelle ultracourte ;
La figure 2 montre en demi coupe longitudinale le moteur de la figure 1 ;
La figure 3 est une coupe avec perspective vue de trois quart arrière de l'inverseur de poussée en position active ;
La figure 4 est une vue en coupe de l'inverseur en position de vol ;
La figure 5 est une vue correspondant à celle de la figure 4 et montre la direction de déplacement des éléments de tuyère pour une augmentation de la section d'échappement en vol d'approche et à l'atterrissage de l'aéronef;
Les figures 6, 7 et 8 sont des coupes avec perspective vues de trois quart avant, montrant le déploiement de l'inverseur de poussée.
Les figures 9 et 10 sont des coupes avec perspective vues de trois quart avant, montrant la fermeture de l'inverseur.

### Description détaillée d'un mode de réalisation de l'invention

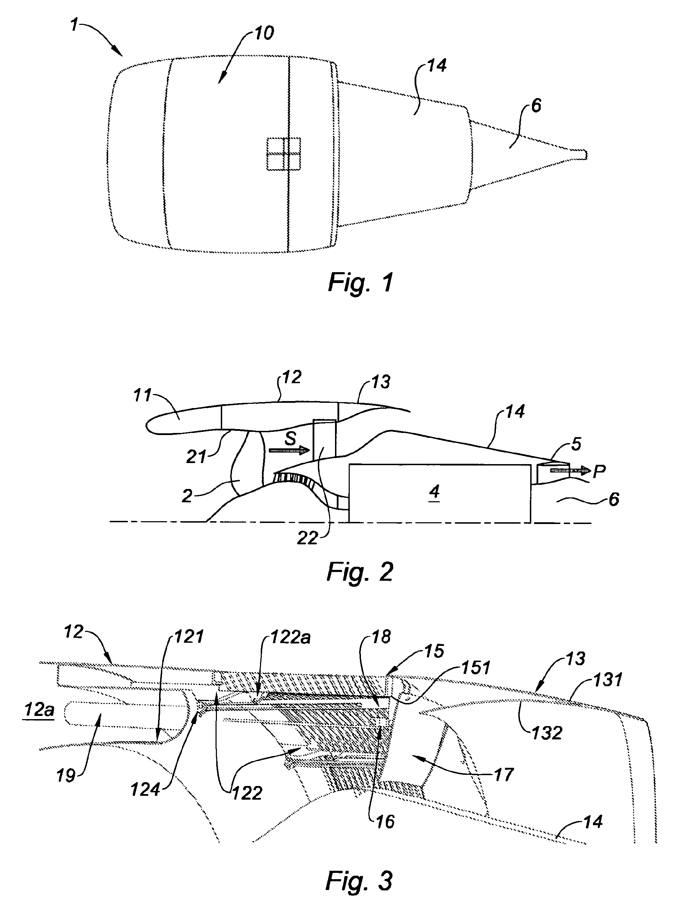

Sur la figure 1 on a représenté un exemple de turboréacteur à double flux. Il comprend une enveloppe cylindrique aérodynamique de la section de soufflante que l'on désigne par la suite nacelle 10 ou nacelle de soufflante. On voit sur cette figure à droite de la nacelle 10, le carénage cylindrique de flux primaire 14 ; il est de plus faible diamètre. Le flux secondaire est éjecté dans l'atmosphère dans l'espace annulaire ménagé entre la nacelle 10 et le corps central. En aval, le cône d'éjection 6 délimite la veine annulaire de flux primaire.

La figure 2 montre partiellement le moteur 1 en demi-coupe longitudinale. Le moteur 1 comprend de la gauche vers la droite, une soufflante 2 amont, en aval de l'élément 11 de la nacelle 10 formant l'entrée d'air. L'air aspiré par la soufflante est séparé en deux flux, primaire P et secondaire S, concentriques. Le flux d'air primaire P est comprimé à nouveau pour être brûlé dans une chambre de combustion, puis détendu dans un ou plusieurs étages de turbine qui entraînent les rotors de compresseur dont la soufflante 2. Cette partie du moteur n'a pas été détaillée et a été représentée par un simple bloc 4. Le flux primaire est éjecté dans une tuyère 5, aval, de flux primaire, annulaire, le long d'un cône d'éjection 6. Un carénage forme l'enveloppe de cette partie du moteur. On désigne ce carénage, carène de flux primaire 14.

La masse d'air aspirée puis le flux secondaire sont confinés dans le carter de soufflante 21. Le flux secondaire en aval de la soufflante traverse les bras du carter intermédiaire 22 et éventuellement des ailettes de guidage puis est éjecté directement dans l'atmosphère, le long de la carène de flux primaire 14. La nacelle 10 entoure le carter de soufflante 21 et le carter intermédiaire 22. La nacelle 10 est formée en aval de l'entrée d'air 11 d'un premier élément de carénage 12 qui s'étend le long du carter de soufflante et de la virole du carter intermédiaire 22. En aval du carter intermédiaire 22, la nacelle 10 comprend un second élément de carénage 13. Ce second élément de carénage 13 définit avec la carène de flux primaire 14, la tuyère d'éjection du flux secondaire.

Le moteur est équipé d'un dispositif d'inversion de poussée par lequel le flux secondaire peut être dévié radialement et vers l'amont de manière à annuler la poussée et fournir une poussée inverse de freinage de l'aéronef lorsqu'il roule au sol.

Il existe des dispositifs différents assurant cette fonction. L'invention concerne un dispositif inverseur de poussée comprenant un élément formant tuyère de flux secondaire mobile vers l'aval tout en déployant des volets inverseurs et ouvrant des passages le long de la nacelle par lesquels le flux bloqué par les volets inverseurs est dévié radialement vers l'extérieur du moteur ; des grilles sont disposées dans les ouvertures pour guider le flux.

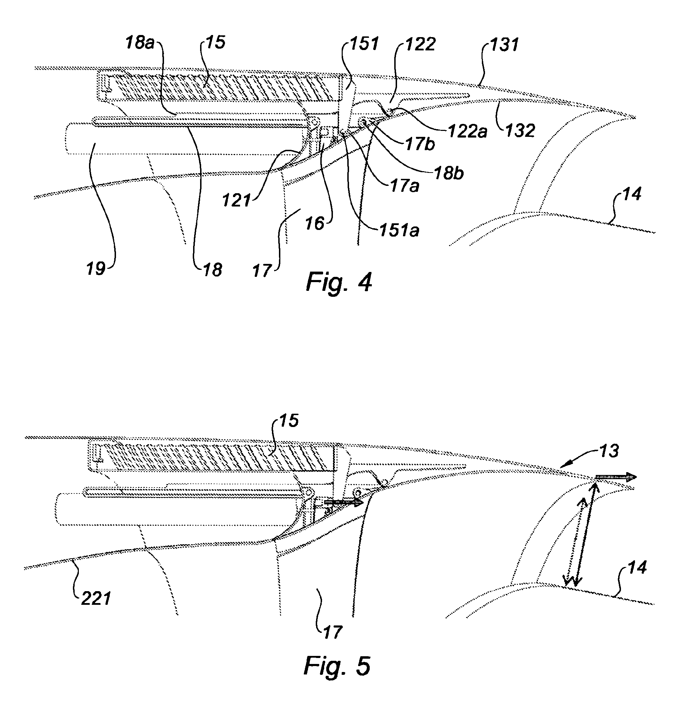

La figure 3 montre le dispositif d'inversion de flux en position active. Les figures 4 et 5 montrent d'autres détails. Le dispositif comprend, une grille ou une pluralité de grilles 15, mobile le long de la paroi intérieure du premier élément de carénage 12, entre une position où elle est entièrement escamotée à l'intérieur de ce premier élément 12 et la position active représentée sur la figure. La grille comprend des ailettes radiales, incurvées vers l'amont, parallèles entre elles et espacées les unes des autres. Leur fonction est de guider le flux qui traverse la grille radialement et vers l'amont.

Un espace 12A est ménagé entre la virole 221 du carter intermédiaire (fig. 5), et l'élément de carénage 12 pour loger les organes de l'inverseur de poussée. La paroi transversale reliant le premier élément 12 à la virole 221 délimite le bord amont de l'ouverture radiale dans la nacelle et forme le bord de déviation 121 du flux.

Cet espace contient également des organes moteurs 19 d'actionnement de l'inverseur ; il peut s'agir de vérins.

La grille 15 est guidée dans son déplacement de l'amont vers l'aval par une pluralité de rails de guidage 122. Ces rails s'étendent depuis le bord de déviation 121 parallèlement à l'axe de la nacelle. La longueur de ces rails correspond à la distance de déploiement maximal de la grille. La grille comprend, par exemple, des glissières qui s'appuient sur les rails le long de son déplacement.

La grille 15 comprend une pluralité de ferrures radiales 151 à l'extrémité desquelles un anneau de synchronisation 16 est fixé. Cet anneau est perpendiculaire à l'axe de la nacelle. L'anneau est relié aux tiges mobiles (fig. 4) des organes moteurs 19.

Sur ces ferrures 151 ou bien sur l'anneau de synchronisation sont montés et articulés des volets inverseurs 17. Les volets comprennent des chapes 17a traversées par des axes 151a, figure. 4, perpendiculaires à l'axe de la nacelle, qui traversent également les ferrures. Ainsi les volets peuvent-ils pivoter autour des axes 151a des ferrures 151 de grilles 15.

Le second élément de carénage 13 est fixé à la grille 15. Ainsi quand la grille se déplace en translation, elle entraîne avec elle les volets inverseurs 17 et le second élément de carénage 13. Cet élément 13 comprend une paroi externe 131 et une paroi interne 132. Ces deux parois se rejoignent à l'aval pour former le bord aval de la nacelle.

Le basculement des volets est commandé par des biellettes 18. Les biellettes s'étendent parallèlement aux rails de guidage 122 le long et sous ceux-ci (rails de guidage). L'extrémité aval des biellettes est fixée aux volets 17. Les volets comprennent une chape interne 17b située en aval par rapport aux chapes 17a. Cette chape 17b est traversée par un axe 18b qui traverse également l'extrémité aval des biellettes 18.

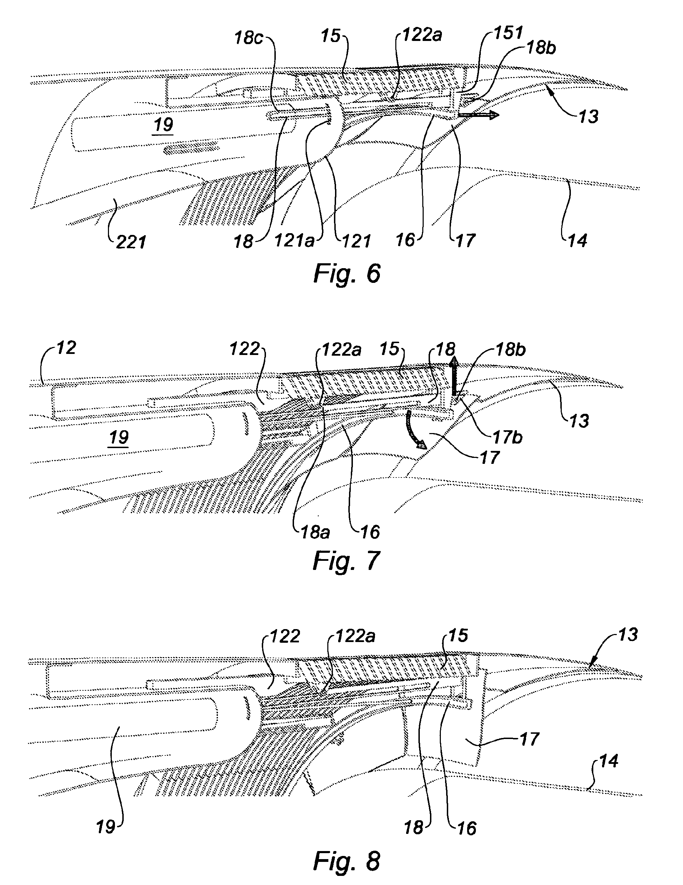

La partie amont des biellettes 18 comprend une glissière 18C, figure 6, dans laquelle coulisse un pion d'arrêt 124 solidaire du bord de déviation 121, figure3. Les biellettes glissent dans une fente 121 a ménagée dans le bord 121 et sont arrêtées par le pion d'arrêt 124 quand celui-ci vient en bout de course de la glissière 18c.

Les biellettes 18 s'appuient contre une roulette 122a fixée sur le bord inférieur des rails de guidage 122. Les roulettes forment butées vers l'extérieur pour les biellettes. Le bord supérieur des biellettes en contact avec les roulettes comprend une échancrure 18a. Les biellettes sont mobiles le long des rails. Lorsque la roulette 122a roule entre l'échancrure 18a et l'axe 18b, elle contraint la biellette en position parallèle aux rails. Lorsque la roulette est entre l'extrémité amont des biellettes 18 et l'échancrure 18a, la biellette est libre de basculer vers l'extérieur. Comme l'extrémité aval est liée au volet 17, la biellette fait pivoter le volet vers l'extérieur.

On décrit le fonctionnement de l'inverseur en rapport avec les figures 4 à 10.

Sur la figure 4 on voit la configuration de vol ; le second élément de carénage 13 est en position amont. L'inverseur est complètement rentré dans la nacelle. La section de sortie de la veine d'air est minimale.

Sur la figure 5, on a représenté le mouvement par des flèches. L'organe moteur 19 pousse l'anneau de synchronisation 16 vers la droite et entraîne l'ensemble de l'inverseur et de la tuyère vers la droite. Les volets sont toujours fermés et la section de la tuyère augmente. Les parois, interne 132 et de la carène 14 sont conformées dans ce but. Cette configuration correspond à la phase d'approche et d'atterrissage de l'aéronef.

Sur la figure 6, l'organe moteur, l'actuateur 19, continue à pousser l'anneau 16. La biellette 18 est guidée en translation le long des rails de guidage 122 grâce au fait que la roulette 122a appuie sur la face supérieure de celle-ci. L'ouverture des volets est empêchée.

Sur la figure 7, la biellette 18 arrive en butée sur le pion d'arrêt 124, non visible sur cette figure. Elle ne peut plus se déplacer vers la droite. L'échancrure 18a de la biellette ayant dépassé la station de la roulette, cette dernière n'appuie plus sur la face supérieure de la biellette 18. Celle-ci est donc libre de tourner autour du pion d'arrêt permettant ainsi le mouvement d'ouverture des volets 17.

Sur la figure 8, l'inverseur est complètement sorti et le pilote de l'aéronef peut remettre les gaz.

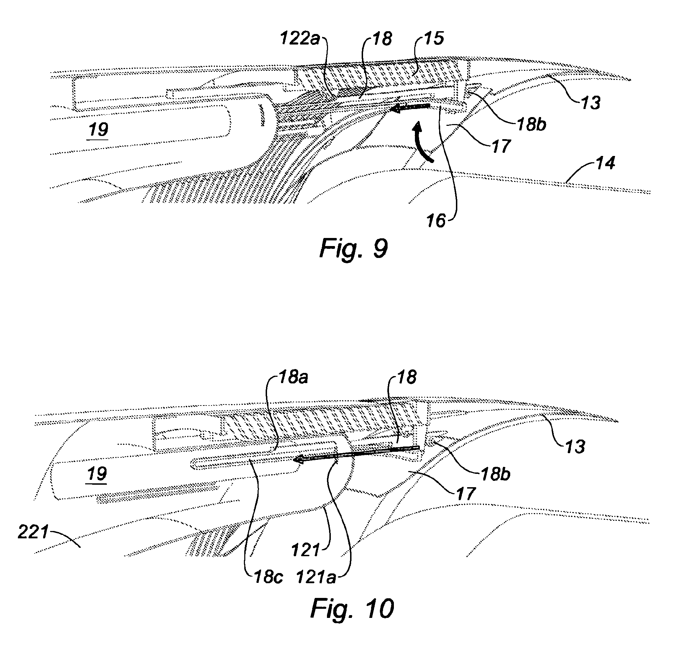

Sur les figures 9 et 10, le mouvement de fermeture de l'inverseur est représenté. L'organe moteur 19 tire l'anneau de synchronisation 16 vers la gauche. La roulette 122a appuie sur l'échancrure de la biellette 18 et l'empêche de se mouvoir vers la gauche. Le volet se ferme donc et la biellette tend à revenir à l'horizontale. Une fois que la biellette est horizontale, le volet est fermé et l'échancrure de la biellette est dégagée de la roulette. La biellette peut donc se déplacer vers la gauche et est guidée en translation par la roulette qui appuie maintenant sur la face supérieure de la biellette.

L'invention par le logement du mécanisme dans le premier élément de la nacelle présente l'avantage de libérer l'espace dans l'élément mobile formant la tuyère. Celui-ci peut donc être réduit.

Le guidage de la biellette permet de maintenir les volets bloqués pendant la phase de variation de section de la tuyère.

## Revendications

1. Nacelle (10) de turboréacteur à double flux, formant l'enveloppe de la soufflante (2) comprenant un premier élément de carénage (12), amont, et un second élément de carénage (13) formant tuyère, le second élément étant mobile en translation entre une position où il assure la continuité aérodynamique de la nacelle et une position aval découvrant des ouvertures d'inversion de flux, un dispositif d'inversion de poussée étant logé dans la nacelle et comprenant des volets (17) inverseurs de flux ainsi que des grilles (15) de guidage radial de flux, les grilles (15) de guidage radial de flux étant mobiles en translation le long de l'axe de la nacelle (10) entre une position où elles sont escamotées dans le premier élément de carénage (12) et une position active de guidage de flux, le second élément de carénage (13) de soufflante étant solidaire desdites grilles (15) et les volets (17) inverseurs étant montés mobiles en rotation autour d'axes transversaux par rapport à l'axe de la nacelle et solidaires desdites grilles (15).

2. Nacelle selon la revendication 1 dont le premier élément de carénage (12) comprend des rails (122) de guidage desdites grilles (15), s'étendant vers l'aval depuis le bord aval (121) du premier élément (12).

3. Nacelle selon l'une des revendications précédentes dont lesdites grilles (15) sont solidaires, d'un anneau (16) de synchronisation perpendiculaire à l'axe du moteur.

4. Nacelle selon l'une des revendications précédentes dont lesdites grilles (15) sont mises en mouvement de translation par un organe moteur (19) logé dans le premier élément de carénage (12).

5. Nacelle selon l'une des revendications 1 à 4 dont les volets (17) inverseurs sont commandés en rotation autour desdits axes transversaux par des biellettes (18).

6. Nacelle selon la revendication 5 dont les biellettes (18) sont montées coulissantes parallèlement à l'axe de la nacelle, une extrémité des biellettes (18) étant articulée sur les volets (17) inverseurs et l'autre extrémité coulissant dans un logement du premier élément de carénage (12).

7. Nacelle selon la revendication précédente combinée avec la revendication 2, dont les biellettes (18) sont guidées le long des rails (122) de guidage avec un agencement entraînant le pivotement des biellettes (18) autour d'un axe perpendiculaire aux rails (122) de guidage, et le basculement des volets (17) inverseurs lorsque le second élément de carénage (13), mobile, est à une distance donnée du premier élément de carénage (12), en position d'inversion de flux.

8. Turboréacteur comprenant une nacelle (10) selon l'une des revendications précédentes dont le second élément (13) mobile, formant tuyère, ménage avec la carène du flux primaire (14), une section de flux variable, fonction de la position axiale du second élément (13).

9. Turboréacteur selon la revendication précédente dont la section de flux augmente quand le second élément (13) formant tuyère est entraîné depuis sa position amont sur une partie de son déplacement vers l'aval, le dispositif d'inversion de poussée étant mis en place quand le second élément (13) formant tuyère poursuit son déplacement vers l'aval.

## Patentansprüche

1. Gondel (10) für Zweikreis-TL-Triebwerk, das einen Mantel des Gebläses (2) bildet, die ein erstes Verkleidungselement (12) stromaufwärts und ein zweites Verkleidungselement (13), das eine Düse bildet, umfasst, wobei das zweite Element in Verschiebung zwischen einer Position, in der es die aerodynamische Kontinuität der Gondel sicherstellt, und einer stromabwärtigen Position, die Strahlumkehröffnungen freigelegt, beweglich ist, wobei eine Schubumkehrvorrichtung in der Gondel untergebracht ist und Strömungsumkehrklappen (17) sowie Gitter (15) zur radialen Führung des Stroms umfasst, wobei die Gitter (15) zur radialen Führung des Stroms in Verschiebung entlang der Achse der Gondel (10), zwischen einer Position, in der sie in das erste Verkleidungselement (12) eingefahren sind, und einer aktiven Strömungsführungsposition beweglich sind, wobei das zweite Verteilungselement (13) des Gebläses fest mit den Gittern (15) verbunden ist und die Umkehrklappen (17) in Drehung um Querachsen in Bezug auf die Achse der Gondel beweglich montiert und mit den Gittern (15) fest verbunden sind.

2. Gondel nach Anspruch 1, deren erstes Verkleidungselement (12) Schienen (122) zum Führen der Gitter (15) umfasst, die sich stromabwärts von dem stromabwärtigen Rand (121) des ersten Elements (12) erstrecken.

3. Gondel nach einem der vorhergehenden Ansprüche, wobei die Gitter (15) fest mit einem Synchronisationsring (16) senkrecht zu der Motorachse verbunden sind.

4. Gondel nach einem der vorhergehenden Ansprüche, deren Gitter (15) von einem Antriebsorgan (19), das in dem ersten Verkleidungselement (12) untergebracht ist, in Verschiebungsbewegung versetzt werden.

5. Gondel nach einem der Ansprüche 1 bis 4, deren Umkehrklappen (17) in Drehung um die Querachsen von Schwingarmen (18) gesteuert sind.

6. Gondel nach Anspruch 5, deren Schwingarme (18) parallel zu der Achse der Gondel gleitend montiert sind, wobei ein Ende der Schwingarme (18) auf den Umkehrklappen (17) angelenkt ist und das andere Ende in einer Aufnahme des ersten Verkleidungselements (12) gleitet.

7. Gondel nach dem vorhergehenden Anspruch, kombiniert mit Anspruch 2, deren Schwingarme (18) entlang der Führungsschienen (122) mit einer Einrichtung geführt sind, die das Schwenken der Schwingarme (18) um eine Achse senkrecht zu den Führungsschienen (122) bewirkt, und das Kippen der Umkehrklappen (17), wenn das zweite Verkleidungselement (13), das beweglich ist, in einer gegebenen Entfernung von dem ersten Verkleidungselement (12) in Stromumkehrposition ist.

8. Triebwerk, das eine Gondel (10) nach einem der vorhergehenden Ansprüche umfasst, deren zweites bewegliches Element (13), das eine Düse bildet, mit der Hülle des Hauptstroms (14) einen Abschnitt mit veränderlichem Strom, der von der axialen Position des zweiten Elements (13) abhängt, bildet.

9. Triebwerk nach dem vorhergehenden Anspruch, dessen Stromquerschnitt zunimmt, wenn das zweite Element (13), das eine Düse bildet, von seiner stromaufwärtigen Position auf einem Teil seines Wegs nach stromabwärts angetrieben wird, wobei die Schubumkehrvorrichtung eingerichtet ist, wenn das zweite Element (13), das eine Düse bildet, seine Bewegung nach stromabwärts fortsetzt.

## Claims

1. Nacelle (10) for a bypass turbojet engine, forming the envelope of the fan (2), comprising a first streamlining element (12), upstream, and a second streamlining element (13) forming a pipe, the second element being movable in translation between a position in which it ensures the aerodynamic continuity of the nacelle and a downstream position uncovering flow reversal openings, a thrust reverser device being accommodated in the nacelle and comprising bypass flow reverser flaps (17) and also cascades (15) for radial guidance of flow, the cascades (15) for radial guidance of flow being movable in translation along the length of the axis of the nacelle (10) between a position in which they are retracted into the first streamlining element (12) and an active flow guidance position, the second streamlining element (13) of the fan being integral with said cascades (15), and in that the reverser flaps (17) being fitted so that they are movable in rotation around axes that are transverse relative to the axis of the nacelle and integral with said cascades (15).

2. Nacelle according to claim 1, the first streamlining element (12) of which comprises rails (122) for guiding said cascades (15), extending in a downstream direction from the upstream edge (121) of the first element (12).

3. Nacelle according to claim 1 or claim 2, said cascades (15) of which are integral with a synchronising ring (16) perpendicular to the axis of the engine.

4. Nacelle according to any of the preceding claims, said cascades (15) of which are set in movement in translation by a motor unit (19) accommodated in the first streamlining element (12).

5. Nacelle according to any of claims 1 to 4, the reverser flaps (17) of which are controlled in rotation around said transverse axes by connecting rods (18).

6. Nacelle according to claim 5, the connecting rods (18) of which are fitted slideably parallel to the axis of the nacelle, one extremity of the connecting rods (18) being articulated on the reverser flaps (17) and the other extremity sliding in a housing of the first streamlining element (12).

7. Nacelle according to the preceding claim combined with claim 2, the connecting rods (18) of which are guided along the length of the guide rails (122) with an arrangement driving the pivoting of the connecting rods (18) around an axis perpendicular to the guide rails (122), and the tilting of the reverser flaps (17) when the second, movable, streamlining element (13) is at a given distance from the first streamlining element (12), in the flow reversal position.

8. Turbojet engine comprising a nacelle (10) according to any of the preceding claims, the second movable element (13) of which, forming a pipe, creates with the primary flow fairing (14) a flow section that is variable, as a function of the axial position of the second element (13).

9. Turbojet engine according to the preceding claim, the flow section of which increases when the second element (13) forming a pipe is driven from its upstream position over a part of its movement in a downstream direction, the thrust reverser device being put in place when the second element (13) forming a pipe continues its movement in a downstream direction.
